# EUROPÄISCHE PATENTSCHRIFT

(11) **EP 3 802 240 B1**
(45) Veröffentlichungstag und Bekanntmachung des Hinweises auf die Patenterteilung: **06.03.2024**
(21) Anmeldenummer: 19724446.0
(22) Anmeldetag: 14.05.2019
(51) Int. Cl.: B60S 1/52, B60S 1/38

(54) **WISCHERVORRICHTUNG**
WIPER DEVICE
DISPOSITIF ESSUIE-GLACE

(30) Priorität: 07.06.2018 DE 102018209034
(43) Veröffentlichungstag der Anmeldung: 14.04.2021
(73) Patentinhaber: Robert Bosch GmbH, 70442 Stuttgart (DE)
(72) Erfinder: KRAEMER, Godelieve, 76549 Huegelsheim (DE); BRATEC, Herve, 3012 WILSELE (BE); VERELST, Hubert, 3300 Tienen (BE)
(86) Internationale Anmeldenummer: PCT/EP2019/062269
(87) Internationale Veröffentlichungsnummer: WO 2019/233710

(56) Entgegenhaltungen:
- EP-A1- 1 918 167
- WO-A1-2012/153027
- DE-A1-102013 215 196
- FR-A1- 2 992 612
- JP-A- 2007 030 565
- US-A- 5 944 910

## Beschreibung

### Stand der Technik

Es ist bereits eine Wischervorrichtung mit zumindest einem Wischblatt und mit zumindest einer Fluidausgabeeinheit, die zumindest eine an dem Wischblatt angeordnete Düseneinheit zu einer Ausgabe zumindest eines Fluids, insbesondere eines Wischwassers, aufweist, vorgeschlagen worden. JP 2007 030565 A offenbart eine Wischervorrichtung ähnlich dem Oberbegriff von Anspruch 1.

### Offenbarung der Erfindung

Die Erfindung geht aus von einer Wischervorrichtung mit zumindest einem Wischblatt und mit zumindest einer Fluidausgabeeinheit, die zumindest eine an dem Wischblatt angeordnete Düseneinheit zu einer Ausgabe zumindest eines Fluids, insbesondere eines Wischwassers, aufweist.

Es wird vorgeschlagen, dass die Düseneinheit zumindest einen Düsengrundkörper aufweist, der an zumindest einem Endbereich des Wischblatts abnehmbar angeordnet, ist.

Die Wischervorrichtung ist vorzugsweise zu einem Einsatz an einem Fahrzeug, insbesondere einem Kraftfahrzeug, vorgesehen. Die Wischervorrichtung ist insbesondere zu einer Reinigung einer Scheibe, insbesondere einer Front- und/oder Heckscheibe, eines Fahrzeugs vorgesehen. Die Düseneinheit ist insbesondere dazu vorgesehen, zu einer Reinigung der Scheibe ein Fluid auf die Scheibe auszugeben, insbesondere zu sprühen. Vorzugsweise ist das Fluid als ein Wischwasser ausgebildet. Das Wischblatt, insbesondere eine Wischlippe des Wischblatts, ist vorzugsweise dazu vorgesehen, zu einer Reinigung der Scheibe über die Scheibe zu wischen. Insbesondere ist das Wischblatt dazu vorgesehen, auf der Scheibe befindlichen Schmutz und/oder ein durch die Düseneinheit auf die Scheibe ausgegebenes Fluid von der Scheibe wegzuwischen. Vorzugsweise ist das Wischblatt angetrieben von zumindest einem Wischerarm zumindest eines Scheibenwischers über die Scheibe bewegbar. Insbesondere umfasst der Scheibenwischer die Wischervorrichtung. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Düseneinheit umfasst zumindest einen Düsenhauptkörper. Erfindungsgemäß ist der Düsenhauptkörper an zumindest einem Adapterbereich des Wischblatts angeordnet, insbesondere an dem Wischblatt fixiert. Insbesondere ist das Wischblatt an dem Adapterbereich mittels eines Wischarmadapters eines Scheibenwischers mit einem Wischerarm des Scheibenwischers verbunden. Bevorzugt ist der Düsenhauptkörper fest, insbesondere unlösbar, an dem Wischblatt angeordnet. Alternativ ist denkbar, dass der Düsenhauptkörper abnehmbar an dem Wischblatt angeordnet ist. Erfindungsgemäß weist der Düsenhauptkörper zumindest ein Düsenelement, bevorzugt eine Mehrzahl von Düsenelementen, auf, die zu einer Ausgabe eines Fluids vorgesehen sind. Die Düsenelemente des Düsenhauptkörpers sind vorzugsweise als Spritzdüsen ausgebildet. Die Düsenelemente des Düsenhauptkörpers sind insbesondere dazu vorgesehen, ein Fluid quer zu einer Bewegungsrichtung des Wischblatts auszugeben. Insbesondere ist eine Mehrheit der Mehrzahl von Düsenelementen des Düsenhauptkörpers von dem Endbereich des Wischblatts weggerichtet an dem Düsenhauptkörper angeordnet. Insbesondere ist die Mehrheit der Mehrzahl von Düsenelementen des Düsenhauptkörpers dazu vorgesehen, ein Fluid zumindest im Wesentlichen in Richtung eines weiteren, von dem Endbereich des Wischblatts abgewandten Endbereichs auszugeben. Vorzugsweise weist die Fluidausgabeeinheit zumindest ein Ventilelement zu einer gesteuerten Zuleitung eines Fluids an die Düseneinheit, insbesondere an den Düsenhauptkörper, auf. Vorzugsweise weist ein Kraftfahrzeug, an dem die Wischervorrichtung einsetzbar ist, zumindest ein Fluidreservoir zu einer Speicherung eines Fluids auf. Insbesondere ist ein Fluid aus dem Fluidreservoir über ein Zuleitungselement, beispielsweise einen Schlauch, eines Scheibenwischers und über das Ventilelement der Fluidausgabeeinheit der Düseneinheit, insbesondere dem Düsenhauptkörper, zuleitbar.

Ein Endbereich des Wischblatts ist insbesondere ein Bereich des Wischblatts, an dem eine zumindest im Wesentlichen komplette maximale Erstreckung des Wischblatts, insbesondere entlang einer Haupterstreckungsrichtung des Wischblatts, endet. Unter einer "Haupterstreckungsrichtung" eines Objekts soll insbesondere eine Richtung verstanden werden, welche parallel zu einer längsten Kante eines kleinsten geometrischen Quaders verläuft, welcher das Objekt gerade noch vollständig umschließt. Vorzugsweise weist das Wischblatt zumindest zwei, insbesondere voneinander abgewandte, Endbereiche auf. Erfindungsgemäß weist die Düseneinheit einen einzelnen Düsengrundkörper auf, der an einem einzelnen Endbereich des Wischblatts angeordnet ist. Insbesondere bildet der Düsengrundkörper den Endbereich des Wischblatts zumindest teilweise aus. Alternativ ist denkbar, dass die Düseneinheit zumindest zwei Düsengrundkörper aufweist, wobei insbesondere jeweils ein Düsengrundkörper an jeweils einem Endbereich des Wischblatts angeordnet ist. Erfindungsgemäß ist der Düsengrundkörper abnehmbar an dem Endbereich des Wischblatts fixiert. Erfindungsgemäß ist der Düsengrundkörper werkzeuglos an dem Endbereich des Wischblatts anordenbar. Erfindungsgemäß ist vorstellbar, dass der Düsengrundkörper fest an dem Endbereich des Wischblatts fixiert, ist. Vorzugsweise weist der Düsengrundkörper zumindest ein Düsenelement auf, das zu einer Ausgabe eines Fluids, insbesondere eines Wischwassers, vorgesehen ist. Vorzugsweise ist das Düsenelement des Düsengrundkörpers zumindest im Wesentlichen analog zu den Düsenelementen des Düsenhauptkörpers ausgebildet. Vorzugsweise umfasst die Fluidausgabeeinheit zumindest ein Fluidleitungselement, beispielsweise einen Schlauch, das zu einer Zuleitung eines Fluids an den Düsengrundkörper vorgesehen ist. Vorzugsweise ist das Fluidleitungselement dazu vorgesehen, dem Düsengrundkörper ein Fluid von dem Düsenhauptkörper und/oder aus dem Fluidreservoir zuzuleiten.

Durch die erfindungsgemäße Ausgestaltung der Wischervorrichtung kann vorteilhaft eine Fluidausgabe an einem Endbereich eines Wischblatts ermöglicht werden. Es kann eine vorteilhaft gleichmäßig verteilte Fluidausgabe entlang des Wischblatts und auf eine Scheibe eines Fahrzeugs erreicht werden. Es kann eine Wischervorrichtung bereitgestellt werden, die eine vorteilhaft gründliche und gleichmäßige Reinigung einer Scheibe eines Fahrzeugs ermöglicht.

Des Weiteren wird vorgeschlagen, dass der Düsengrundkörper einteilig mit zumindest einer Endkappe des Wischblatts ausgebildet ist. Insbesondere bildet der Düsengrundkörper die Endkappe des Wischblatts zumindest teilweise, bevorzugt vollständig, aus. Insbesondere stellt die Endkappe des Wischblatts einen Abschluss des Wischblatts in einem Endbereich des Wischblatts dar. Die Endkappe kann insbesondere dazu vorgesehen sein, weitere Bauteile des Wischblatts, beispielsweise einen Spoiler, zu fixieren. Vorzugsweise ist der Düsengrundkörper bzw. die Endkappe aus einem Kunststoff ausgebildet. Alternativ ist denkbar, dass der Düsengrundkörper bzw. die Endkappe aus einem Verbundwerkstoff, insbesondere einem Faserverbundwerkstoff, aus einem Metall oder aus einem anderen, einem Fachmann als sinnvoll erscheinenden Werkstoff ausgebildet ist. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Vorteilhaft kann der Düsengrundkörper eine Doppelfunktion zur Fluidausgabe und als Endkappe des Wischblatts erfüllen. Vorteilhaft kann auf eine separat von dem Düsengrundkörper ausgebildete Endkappe verzichtet werden. Vorteilhaft kann eine kompakt ausgebildete und kostengünstige Wischervorrichtung bereitgestellt werden.

Erfindungsgemäß wird vorgeschlagen, dass der Düsengrundkörper zumindest ein Fixierelement aufweist, das zu einer kraft- und/oder formschlüssigen, insbesondere werkzeuglosen, Fixierung des Düsengrundkörpers an zumindest einem Montagefortsatz des Wischblatts, vorgesehen ist. Erfindungsgemäß ist der Düsengrundkörper mittels des Fixierelements werkzeuglos an dem Montagefortsatz des Wischblatts, fixierbar. Insbesondere kann der Düsengrundkörper mittels des Fixierelements an den Montagefortsatz des Wischblatts klemmbar, auf den Montagefortsatz des Wischblatts aufsteckbar, mit dem Montagefortsatz verrastbar o. dgl. sein. Alternativ, aber nicht erfindungsgemäß, ist vorstellbar, dass der Düsengrundkörper mittels des Fixierelements unter Verwendung zumindest eines Werkzeugs an dem Wischblatt, insbesondere an dem Montagefortsatz des Wischblatts, fixierbar, beispielhaft verschraubbar, ist. Der Montagefortsatz ist vorzugsweise auf einer der Wischlippe des Wischblatts abgewandten Seite des Wischblatts angeordnet. Der Montagefortsatz ist insbesondere in dem Endbereich des Wischblatts angeordnet. Erfindungsgemäß ist der Montagefortsatz federartig ausgebildet, insbesondere zu einem Eingriff in das, insbesondere nutartig ausgebildete, Fixierelement des Düsengrundkörpers. Der Montagefortsatz weist vorzugsweise einen zumindest im Wesentlichen "T"-förmigen Querschnitt auf. Das Fixierelement des Düsengrundkörpers ist vorzugsweise als eine zumindest abschnittsweise Ausnehmung, insbesondere eine Nut, in dem Düsengrundkörper ausgebildet. Alternativ, nicht erfindungsgemäß, ist vorstellbar, dass der Montagefortsatz als eine zumindest abschnittsweise Ausnehmung, insbesondere eine Nut, in dem Wischblatt und das Fixierelement als ein, insbesondere federartig ausgebildeter, Fortsatz des Düsengrundkörpers ausgebildet ist. Vorzugsweise weist das Fixierelement eine mit einer Formgebung des Montagefortsatzes korrespondierende Formgebung auf. Insbesondere weist das Fixierelement zumindest einen Rastfortsatz zu einer Verrastung mit dem Montagefortsatz auf. Bevorzugt weist das Fixierelement zwei Rastfortsätze zu einer zweiseitigen Verrastung mit dem Montagefortsatz auf. Vorzugsweise stehen der Montagefortsatz und das Fixierelement in einem an dem Wischblatt fixierten Zustand des Düsengrundkörpers in einem kraft- und/oder formschlüssigen Eingriff miteinander. Insbesondere liegen der Montagefortsatz und das Fixierelement in einem an dem Wischblatt fixierten Zustand des Düsengrundkörpers zumindest im Wesentlichen formgenau, insbesondere puzzleteilartig, aneinander an. Es kann eine vorteilhaft komfortable, insbesondere werkzeuglose, und vorteilhaft stabile Fixierung des Düsengrundkörpers an dem Wischblatt ermöglicht werden. Vorteilhaft kann auf separate Befestigungselemente zu einer Fixierung des Düsengrundkörpers an dem Wischblatt verzichtet werden.

Weiterhin wird vorgeschlagen, dass die Wischervorrichtung zumindest einen an dem Wischblatt anordenbaren Spoiler umfasst, wobei der Düsengrundkörper zumindest einen Spoilerfortsatz aufweist, der zumindest einen Teil des Spoilers ausbildet. Der Spoiler weist vorzugsweise einen Spoilergrundkörper auf. Insbesondere bildet der Spoilergrundkörper gemeinsam mit dem Spoilerfortsatz des Düsengrundkörpers den Spoiler aus. Vorzugsweise ist der Spoilergrundkörper fest an dem Wischblatt angeordnet, insbesondere einteilig mit dem Wischblatt ausgebildet. Alternativ ist vorstellbar, dass der Spoilergrundkörper separat von dem Wischblatt ausgebildet ist und insbesondere kraft- und/oder formschlüssig mit dem Wischblatt verbindbar, insbesondere an dem Wischblatt fixierbar, ist. Der Spoiler ist vorzugsweise dazu vorgesehen, aus einem Fahrtwind einen Anpressdruck, insbesondere der Wischlippe des Wischblatts gegen eine Scheibe eines Fahrzeugs, zu generieren. Insbesondere kann der Spoilergrundkörper, insbesondere entlang der Haupterstreckungsrichtung des Wischblatts betrachtet, asymmetrisch ausgebildet sein. Vorzugsweise erstreckt sich der Spoilergrundkörper an dem Wischblatt außerhalb des Endbereichs des Wischblatts entlang einer zumindest im Wesentlichen kompletten maximalen Erstreckung des Wischblatts entlang der Haupterstreckungsrichtung des Wischblatts. Vorzugsweise ist ein Teil des Spoilers in dem Endbereich des Wischblatts durch den Spoilerfortsatz des Düsengrundkörpers ausgebildet. Vorzugsweise ist der Spoilerfortsatz an einer dem Fixierelement abgewandten Seite des Düsengrundkörpers angeordnet. Vorzugsweise weist der Spoilerfortsatz eine zumindest im Wesentlichen analoge Formgebung zu dem Spoilergrundkörper auf. Insbesondere liegen der Spoilergrundkörper und der Spoilerfortsatz in einem an dem Wischblatt angeordneten Zustand des Spoilergrundkörpers und des Düsengrundkörpers zumindest im Wesentlichen formgenau, insbesondere zumindest im Wesentlichen bündig, aneinander an, insbesondere entlang der Haupterstreckungsrichtung des Wischblatts betrachtet. Insbesondere ist der Spoilerfortsatz dazu vorgesehen, als eine optische und/oder funktionelle Verlängerung des Spoilergrundkörpers in dem Endbereich des Wischblatts zu dienen. Vorteilhaft kann der Düsengrundkörper zumindest abschnittsweise eine Funktion eines Spoilers erfüllen. Vorteilhaft kann auf einen separat zu dem Düsengrundkörper ausgebildeten Spoiler in dem Endbereich des Wischblatts verzichtet werden.

Zudem wird vorgeschlagen, dass der Düsengrundkörper zumindest ein Kupplungselement zu einer fluidtechnischen Verbindung mit zumindest einem Fluidleitungselement der Fluidausgabeeinheit aufweist, das dazu vorgesehen ist, dem Düsengrundkörper zumindest ein Fluid zuzuführen. Vorzugsweise ist das Kupplungselement auf einer dem Fixierelement abgewandten Seite des Düsengrundkörpers angeordnet. Insbesondere ist das Kupplungselement quer zu der Haupterstreckungsrichtung des Wischblatts beabstandet zu dem Spoilerfortsatz angeordnet. Vorzugsweise erstreckt sich das Kupplungselement zumindest abschnittsweise in Richtung des Adapterbereichs des Wischblatts. Das Kupplungselement ist vorzugsweise zumindest im Wesentlichen als ein Rohr ausgebildet. Das Kupplungselement ist insbesondere dazu vorgesehen, ein dem Düsengrundkörper von dem Fluidleitungselement zugeführtes Fluid an das Düsenelement des Düsengrundkörpers zu leiten. Das Fluidleitungselement ist vorzugsweise als ein, insbesondere zumindest teilelastischer, Schlauch ausgebildet, innerhalb dessen insbesondere ein Fluid fließen kann. Vorzugsweise ist das Fluidleitungselement zu einer fluidtechnischen Verbindung mit dem Kupplungselement zumindest abschnittsweise auf das Kupplungselement aufschiebbar. Insbesondere ist das Fluidleitungselement, insbesondere aufgrund einer Eigenelastizität des Fluidleitungselements, an dem Kupplungselement festklemmbar. Alternativ oder zusätzlich ist denkbar, dass die Fluidausgabeeinheit zumindest eine Schlauchschelle, zumindest eine Schlauchklemme o. dgl. zu einer Fixierung des Fluidleitungselements an dem Kupplungselement aufweist. Vorzugsweise ist das Fluidleitungselement zu einer Zuführung eines Fluids an den Düsengrundkörper aus dem Düsenhauptkörper vorgesehen. Insbesondere ist das Fluidleitungselement dazu vorgesehen, den Düsengrundkörper fluidtechnisch mit dem Düsenhauptkörper zu verbinden. Vorzugsweise verläuft das Fluidleitungselement, insbesondere zumindest im Wesentlichen linear, zwischen dem Düsenhauptkörper und dem Düsengrundkörper. Insbesondere verläuft das Fluidleitungselement zumindest im Wesentlichen parallel zu einer Haupterstreckungsrichtung des Wischblatts an dem Wischblatt, insbesondere entlang des Spoilers. Alternativ ist denkbar, dass das Fluidleitungselement dazu vorgesehen ist, dem Düsengrundkörper ein Fluid direkt aus dem Fluidreservoir zuzuführen. Vorteilhaft kann eine Fluidzufuhr an den Düsengrundkörper sichergestellt werden.

Des Weiteren wird vorgeschlagen, dass der Düsengrundkörper zumindest ein Düsenelement aufweist, das dazu vorgesehen ist, zumindest ein Fluid zumindest im Wesentlichen in Richtung eines Adapterbereichs des Wischblatts auszugeben. Das Düsenelement des Düsengrundkörpers ist insbesondere zumindest als eine Öffnung in dem Düsengrundkörper, bevorzugt als ein Ventil, ausgebildet. Vorzugsweise ist das Düsenelement des Düsengrundkörpers zumindest im Wesentlichen in Richtung des Adapterbereichs ausgerichtet. Vorzugsweise ist das Düsenelement des Düsengrundkörpers fluidtechnisch mit dem Kupplungselement, insbesondere innerhalb des Düsengrundkörpers, verbunden. Insbesondere ist das Kupplungselement dazu vorgesehen, dem Düsenelement des Düsengrundkörpers ein auszugebendes Fluid bereitzustellen. Bevorzugt weist der Düsengrundkörper ein einzelnes Düsenelement auf. Alternativ ist vorstellbar, dass der Düsengrundkörper eine Mehrzahl von Düsenelementen aufweist. Vorzugsweise ist das Düsenelement des Düsengrundkörpers zu einer Ausgabe, insbesondere einem Spritzen, eines Fluids unter einem Überdruck im Vergleich zu einem Umgebungsdruck der Wischervorrichtung vorgesehen. Das Düsenelement des Düsengrundkörpers kann vorzugsweise zumindest im Wesentlichen analog zu den Düsenelementen des Düsenhauptkörpers ausgebildet sein. Vorteilhaft kann eine zielgerichtete Fluidausgabe ermöglicht werden.

Ferner wird vorgeschlagen, dass das Düsenelement zumindest teilweise als ein Ventil, insbesondere als ein Kugelventil, ausgebildet ist. Bevorzugt ist das Düsenelement des Düsengrundkörpers zumindest teilweise als ein Kugelventil ausgebildet. Alternativ ist vorstellbar, dass das Düsenelement des Düsengrundkörpers als ein Tellerventil, als ein Kolbenventil oder als ein anderes, einem Fachmann als sinnvoll erscheinendes Ventil ausgebildet ist. Insbesondere können die Düsenelemente des Düsenhauptkörpers auch als Ventile, insbesondere als Kugelventile, ausgebildet sein. Vorzugsweise ist das als ein Ventil ausgebildete Düsenelement des Düsengrundkörpers dazu vorgesehen, ein Fluid in Abhängigkeit von einem Druck des Fluids auszugeben. Insbesondere ist das als ein Ventil ausgebildete Düsenelement des Düsengrundkörpers dazu vorgesehen, eine Ausgabeöffnung des Düsengrundkörpers in Abhängigkeit von einem Druck eines Fluids zu öffnen und zu schließen. Alternativ oder zusätzlich ist vorstellbar, dass das als ein Ventil ausgebildete Düsenelement des Düsengrundkörpers steuer- und/oder regelbar, beispielsweise durch eine Fahrzeugelektronik eines Fahrzeugs, an dem die Wischervorrichtung verwendbar ist, ausgebildet ist. Insbesondere ist denkbar, dass das als ein Ventil ausgebildete Düsenelement des Düsengrundkörpers zu einer Ausgabe eines Fluids in Abhängigkeit von einer Steuerung und/oder Regelung, beispielsweise durch die Fahrzeugelektronik, vorgesehen ist. Vorteilhaft kann eine dosierte Fluidausgabe ermöglicht werden. Vorteilhaft kann auf zusätzliche Ventile der Fluidausgabeeinheit verzichtet werden. Vorteilhaft kann eine kompakt ausgebildete Wischervorrichtung bereitgestellt werden. Weiterhin wird vorgeschlagen, dass die Wischervorrichtung zumindest ein Befestigungselement umfasst, das zu einer kraft- und/oder formschlüssigen, insbesondere werkzeuglosen, Befestigung des Düsengrundkörpers, zumindest eines Fluidleitungselements der Fluidausgabeeinheit und/oder zumindest eines Zusatzdüsenkörpers der Düseneinheit an dem Wischblatt, insbesondere an zumindest einem einteilig mit dem Wischblatt ausgebildeten Spoiler, vorgesehen ist. Vorzugsweise ist das Befestigungselement zumindest im Wesentlichen als eine Klammer bzw. eine Klemme ausgebildet. Vorzugsweise ist das Befestigungselement an dem Wischblatt, insbesondere an dem Spoilergrundkörper, fixierbar, insbesondere anklemmbar. Vorzugsweise weist das Befestigungselement Befestigungsfortsätze zu einer Fixierung des Düsengrundkörpers, des Fluidleitungselements und/oder des Zusatzdüsenkörpers auf. Insbesondere sind/ist der Düsengrundkörper, das Fluidleitungselement und/oder der Zusatzdüsenkörper zwischen zumindest zwei Befestigungsfortsätzen an dem Befestigungselement festklemmbar. Insbesondere sind/ist der Düsengrundkörper, das Fluidleitungselement und/oder der Zusatzdüsenkörper über das Befestigungselement an dem Wischblatt, insbesondere an dem Spoilergrundkörper, befestigbar. Bevorzugt ist das Befestigungselement als ein zusätzlicher Befestigungspunkt für das Fluidleitungselement und/oder für den Zusatzdüsenkörper an dem Wischblatt zwischen dem Düsengrundkörper und dem Düsenhauptkörper vorgesehen.

Der Zusatzdüsenkörper ist insbesondere als ein weiterer Düsenkörper ausgebildet, der insbesondere zusätzlich zu dem Düsengrundkörper und dem Düsenhauptkörper an dem Wischblatt anordenbar ist. Bevorzugt weist die Düseneinheit einen einzelnen Zusatzdüsenkörper auf. Alternativ ist vorstellbar, dass die Düseneinheit eine Mehrzahl von Zusatzdüsenkörpern aufweist, die insbesondere beabstandet voneinander an dem Wischblatt anordenbar sind. Der Zusatzdüsenkörper ist vorzugsweise zumindest im Wesentlichen zylinderförmig, insbesondere rohrartig, ausgebildet. Vorzugsweise ist der Zusatzdüsenkörper entlang der Haupterstreckungsrichtung des Wischblatts betrachtet zwischen dem Düsengrundkörper und dem Düsenhauptkörper anordenbar. Vorzugsweise weist der Zusatzdüsenkörper zumindest ein Düsenelement zu einer Ausgabe eines Fluids auf. Bevorzugt weist der Zusatzdüsenkörper zwei Düsenelemente auf, wobei insbesondere eines der Düsenelemente des Zusatzdüsenkörpers zumindest im Wesentlichen in Richtung des Adapterbereichs des Wischblatts und ein weiteres der Düsenelemente des Zusatzdüsenkörpers zumindest im Wesentlichen in Richtung des Düsengrundkörpers ausgerichtet ist. Die Düsenelemente des Zusatzdüsenkörpers sind vorzugsweise zumindest im Wesentlichen analog zu dem Düsenelement des Düsengrundkörpers ausgebildet. Vorzugsweise weist der Zusatzdüsenkörper zumindest ein Kupplungselement zu einer fluidtechnischen Verbindung mit zumindest einem Fluidleitungselement auf. Bevorzugt umfasst der Zusatzdüsenkörper zwei, insbesondere an zwei voneinander abgewandten Seiten des Zusatzdüsenkörpers angeordnete, Kupplungselemente, wobei insbesondere jedes der Kupplungselemente des Zusatzdüsenkörpers zu einer fluidtechnischen Verbindung mit jeweils einem Fluidleitungselement der Fluidausgabeeinheit vorgesehen ist. Vorzugsweise sind die Kupplungselemente des Zusatzdüsenkörpers zumindest im Wesentlichen analog zu dem Kupplungselement des Düsengrundkörpers ausgebildet. Vorzugsweise ist ein Fluidleitungselement dazu vorgesehen, den Zusatzdüsenkörper fluidtechnisch mit dem Düsenhauptkörper zu verbinden. Vorzugsweise ist ein weiteres Fluidleitungselement dazu vorgesehen, den Zusatzdüsenkörper fluidtechnisch mit dem Düsengrundkörper zu verbinden.

Das Befestigungselement ist vorzugsweise zu einer Befestigung des Düsengrundkörpers, des Fluidleitungselements oder des Zusatzdüsenkörpers an dem Wischblatt vorgesehen. Insbesondere kann die Wischervorrichtung eine Mehrzahl von Befestigungselementen aufweisen, wobei insbesondere jeweils zumindest eines der Befestigungselemente zu einer Befestigung des Düsengrundkörpers an dem Wischblatt, jeweils zumindest eines der Befestigungselemente zu einer Befestigung des Fluidleitungselements an dem Wischblatt und jeweils zumindest eines der Befestigungselemente zu einer Befestigung des Zusatzdüsenkörpers an dem Wischblatt vorgesehen ist. Alternativ ist vorstellbar, dass das Befestigungselement zu einer Befestigung des Düsengrundkörpers, des Fluidleitungselements und des Zusatzdüsenkörpers an dem Wischblatt vorgesehen ist. Insbesondere ist denkbar, dass das Befestigungselement eine Mehrzahl von Befestigungsfortsätzen zu einer, insbesondere gleichzeitigen, Befestigung des Düsengrundkörpers, des Fluidleitungselements und des Zusatzdüsenkörpers an dem Wischblatt aufweist. Vorteilhaft kann eine flexible und komfortable Befestigung von verschiedenen Bauteilen an dem Wischblatt ermöglicht werden.

Nicht Teil der Erfindung ist die hier nachfolgende Beschreibung eines Verfahrens zu einer Montage einer Wischervorrichtung, insbesondere einer erfindungsgemäßen Wischervorrichtung. Es wird vorgeschlagen, dass in zumindest einem Verfahrensschritt zumindest ein Düsengrundkörper zumindest einer Düseneinheit an zumindest einem Endbereich zumindest eines Wischblatts angeordnet, insbesondere abnehmbar angeordnet, wird. Vorteilhaft kann eine Wischervorrichtung mit einem an einem Wischblatt angeordneten Düsengrundkörper bereitgestellt werden.

Des Weiteren wird vorgeschlagen, dass in zumindest einem Verfahrensschritt der Düsengrundkörper mittels zumindest eines Fixierelements des Düsengrundkörpers kraft- und/oder formschlüssig, insbesondere werkzeuglos, an dem Wischblatt, insbesondere an zumindest einem Montagefortsatz des Wischblatts, befestigt wird. Es kann ein vorteilhaft komfortables Verfahren zu einer Befestigung des Düsengrundkörpers und dem Wischblatt bereitgestellt werden.

Ferner geht die Erfindung aus von einem Scheibenwischer mit zumindest einer erfindungsgemäßen Wischervorrichtung. Vorzugsweise umfasst der Scheibenwischer weitere, insbesondere zu einem Betrieb des Scheibenwischers notwendige, Bauteile. Vorzugsweise umfasst der Scheibenwischer zumindest einen Wischerarm zu einem Antrieb der Wischervorrichtung, insbesondere des Wischblatts. Vorzugsweise weist der Scheibenwischer zumindest einen Wischarmadapter zu einer Verbindung des Wischarms mit der Wischervorrichtung, insbesondere mit dem Wischblatt, auf. Vorteilhaft kann ein Scheibenwischer bereitgestellt werden, der eine gleichmäßige Reinigung einer Scheibe eines Fahrzeugs ermöglicht.

Die erfindungsgemäße Wischervorrichtung und/oder der erfindungsgemäße Scheibenwischer sollen/soll hierbei nicht auf die oben beschriebene Anwendung und Ausführungsform beschränkt sein. Insbesondere können/kann die erfindungsgemäße Wischervorrichtung und/oder der erfindungsgemäße Scheibenwischer zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Scheibenwischer in einer perspektivischen Darstellung,
- Fig. 2: einen Teil einer erfindungsgemäßen Wischervorrichtung in einer perspektivischen Darstellung,
- Fig. 3: eine Schnittansicht der erfindungsgemäßen Wischervorrichtung in einer schematischen Darstellung,
- Fig. 4: eine Fluidausgabeeinheit der erfindungsgemäßen Wischervorrichtung in einer perspektivischen Darstellung,
- Fig. 5: einen Düsengrundkörper der erfindungsgemäßen Wischervorrichtung in einer schematischen Darstellung und
- Fig. 6: einen Zusatzdüsenkörper der erfindungsgemäßen Wischervorrichtung in einer perspektivischen Darstellung.

### Beschreibung des Ausführungsbeispiels

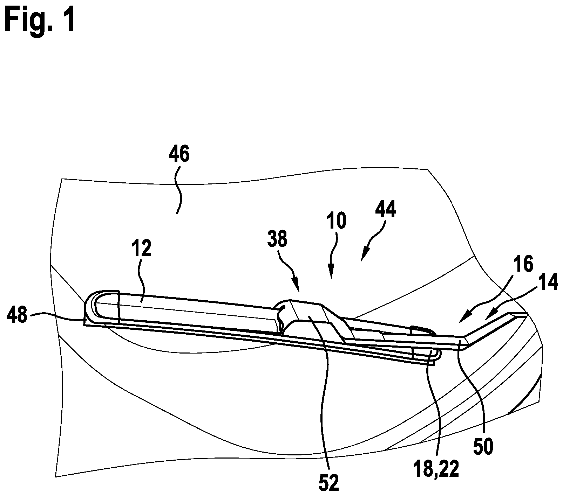

Figur 1 zeigt einen Scheibenwischer 44 in einer perspektivischen Darstellung. Der Scheibenwischer 44 umfasst eine Wischervorrichtung 10. Die Wischervorrichtung 10 weist ein Wischblatt 12 auf. Die Wischervorrichtung 10 umfasst zumindest eine Fluidausgabeeinheit 14, die zumindest eine an dem Wischblatt 12 angeordnete Düseneinheit 16 zu einer Ausgabe zumindest eines Fluids, insbesondere eines Wischwassers, aufweist. Ein Großteil der Fluidausgabeeinheit 14 ist in Figur 1 auf einer einer Scheibe 46 eines Fahrzeugs zugewandten Seite des Wischblatts 12 angeordnet und deshalb in Figur 1 nicht zu erkennen. Die Düseneinheit 16 umfasst einen Düsengrundkörper 18. Der Düsengrundkörper 18 bildet zumindest teilweise eine Endkappe 22 des Wischblatts 12 aus. Die Wischervorrichtung 10 ist zu einem Einsatz an einem Fahrzeug, insbesondere einem Kraftfahrzeug, vorgesehen. Die Wischervorrichtung 10 ist zu einer Reinigung einer Scheibe 46, insbesondere einer Front- und/oder Heckscheibe, eines Fahrzeugs vorgesehen. Die Scheibe 46 in Figur 1 ist beispielhaft als Frontscheibe, insbesondere als Windschutzscheibe, eines Fahrzeugs ausgebildet. Das Wischblatt 12, insbesondere eine Wischlippe 48 des Wischblatts 12, ist dazu vorgesehen, zu einer Reinigung der Scheibe 46 über die Scheibe 46 zu wischen. Das Wischblatt 12 ist dazu vorgesehen, auf der Scheibe 46 befindlichen Schmutz und/oder ein durch die Düseneinheit 16 auf die Scheibe 46 ausgegebenes Fluid von der Scheibe 46 wegzuwischen. Das Wischblatt 12 ist angetrieben von zumindest einem Wischerarm 50 des Scheibenwischers 44 über die Scheibe 46 bewegbar. Der Wischerarm 50 ist zu einem Antrieb der Wischervorrichtung 10, insbesondere des Wischblatts 12, vorgesehen. Der Scheibenwischer 44 weist einen Wischarmadapter 52 auf. Der Wischarmadapter 52 ist zu einer Verbindung des Wischerarms 50 mit der Wischervorrichtung 10, insbesondere mit dem Wischblatt 12, vorgesehen.

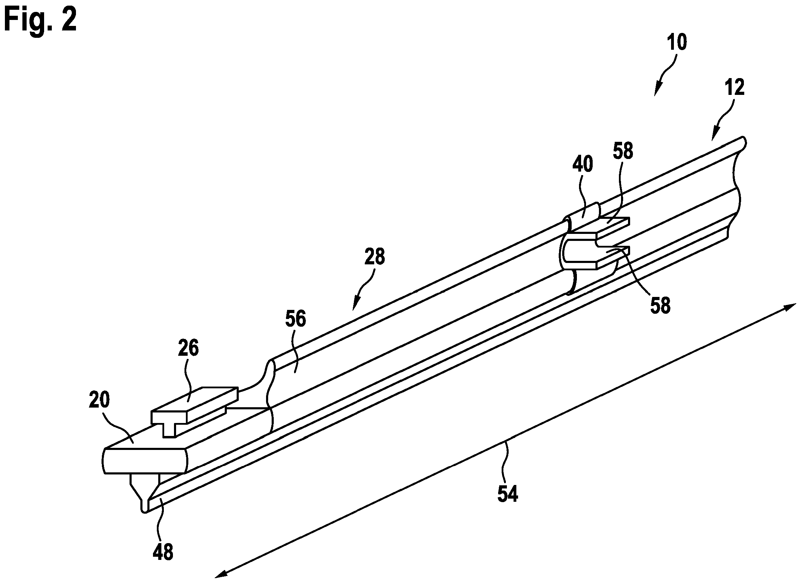

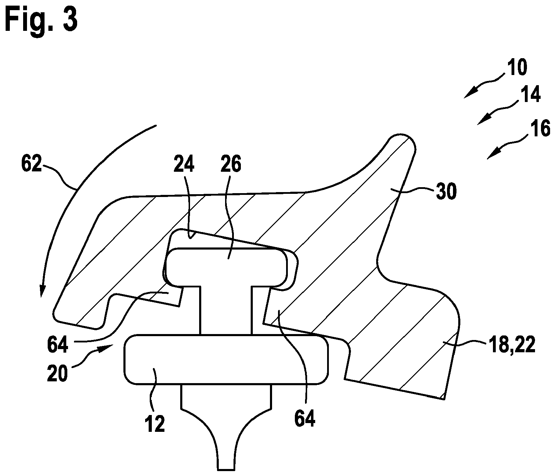

Figur 2 zeigt einen Teil der Wischervorrichtung 10 in einer perspektivischen Darstellung. Dargestellt ist das Wischblatt 12. Die Düseneinheit 16 weist zumindest einen Düsengrundkörper 18 auf, der an zumindest einem Endbereich 20 des Wischblatts 12 angeordnet, insbesondere abnehmbar angeordnet, ist (vgl. Figur 3). Ein Endbereich 20 des Wischblatts 12 ist ein Bereich des Wischblatts 12, an dem eine zumindest im Wesentlichen komplette maximale Erstreckung des Wischblatts 12, insbesondere entlang einer Haupterstreckungsrichtung 54 des Wischblatts 12, endet. Vorzugsweise weist das Wischblatt 12 zumindest zwei, insbesondere voneinander abgewandte, Endbereiche 20 auf. In Figur 2 ist lediglich ein einzelner Endbereich 20 dargestellt. Das Wischblatt 12 weist einen Montagefortsatz 26 auf. Der Montagefortsatz 26 ist auf einer der Wischlippe 48 des Wischblatts 12 abgewandten Seite des Wischblatts 12 angeordnet. Der Montagefortsatz 26 ist in dem Endbereich 20 des Wischblatts 12 angeordnet. Der Montagefortsatz 26 ist federartig ausgebildet. Der Montagefortsatz 26 ist zu einem Eingriff in ein, insbesondere nutartig ausgebildetes, Fixierelement 24 des Düsengrundkörpers 18 vorgesehen. Der Montagefortsatz 26 weist einen zumindest im Wesentlichen "T"-förmigen Querschnitt auf.

Die Wischervorrichtung 10 umfasst zumindest einen an dem Wischblatt 12 anordenbaren Spoiler 28, wobei der Düsengrundkörper 18 zumindest einen Spoilerfortsatz 30 aufweist, der zumindest einen Teil des Spoilers 28 ausbildet. Der Spoiler 28 weist einen Spoilergrundkörper 56 auf. Der Spoilergrundkörper 56 bildet gemeinsam mit dem Spoilerfortsatz 30 des Düsengrundkörpers 18 den Spoiler 28 aus. Der Spoilergrundkörper 56 ist fest an dem Wischblatt 12 angeordnet. Der Spoilergrundkörper 56 ist einteilig mit dem Wischblatt 12 ausgebildet. Alternativ ist vorstellbar, dass der Spoilergrundkörper 56 separat von dem Wischblatt 12 ausgebildet ist und kraft- und/oder formschlüssig mit dem Wischblatt 12 verbindbar, insbesondere an dem Wischblatt 12 fixierbar, ist. Der Spoiler 28 ist dazu vorgesehen, aus einem Fahrtwind einen Anpressdruck der Wischlippe 48 des Wischblatts 12 gegen die Scheibe 46 des Fahrzeugs zu generieren. Der Spoilergrundkörper 56 ist, insbesondere entlang der Haupterstreckungsrichtung 54 des Wischblatts 12 betrachtet, asymmetrisch ausgebildet. Der Spoilergrundkörper 56 erstreckt sich an dem Wischblatt 12 außerhalb des Endbereichs 20 des Wischblatts 12 entlang einer zumindest im Wesentlichen kompletten maximalen Erstreckung des Wischblatts 12 entlang der Haupterstreckungsrichtung 54 des Wischblatts 12.

Die Wischervorrichtung 10 umfasst zumindest ein Befestigungselement 40, das zu einer kraft- und/oder formschlüssigen, insbesondere werkzeuglosen, Befestigung des Düsengrundkörpers 18, zumindest eines Fluidleitungselements 34 der Fluidausgabeeinheit 14 und/oder zumindest eines Zusatzdüsenkörpers 42 der Düseneinheit 16 an dem Wischblatt 12, insbesondere an zumindest einem einteilig mit dem Wischblatt 12 ausgebildeten Spoiler 28, vorgesehen ist. Das Befestigungselement 40 ist zumindest im Wesentlichen als eine Klammer bzw. eine Klemme ausgebildet. Das Befestigungselement 40 ist an dem Wischblatt 12, insbesondere an dem Spoilergrundkörper 56, fixierbar, insbesondere anklemmbar.

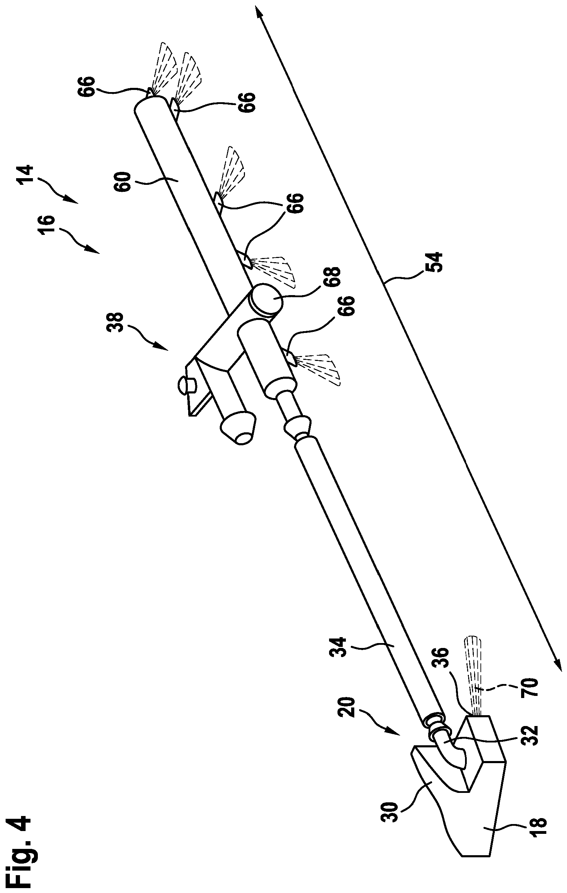

In Figur 2 ist das Befestigungselement 40 an dem Spoilergrundkörper 56 fixiert dargestellt. Das Befestigungselement 40 weist Befestigungsfortsätze 58 auf. Die Befestigungsfortsätze 58 sind zu einer Fixierung des Düsengrundkörpers 18, des Fluidleitungselements 34 und/oder des Zusatzdüsenkörpers 42 vorgesehen. Der Düsengrundkörper 18, das Fluidleitungselement 34 und/oder der Zusatzdüsenkörper 42 sind/ist zwischen zumindest zwei Befestigungsfortsätzen 58 an dem Befestigungselement 40 festklemmbar. Der Düsengrundkörper 18, das Fluidleitungselement 34 und/oder der Zusatzdüsenkörper 42 sind/ist über das Befestigungselement 40 an dem Wischblatt 12, insbesondere an dem Spoilergrundkörper 56, befestigbar. Das Befestigungselement 40 ist als ein zusätzlicher Befestigungspunkt für das Fluidleitungselement 34 und/oder für den Zusatzdüsenkörper 42 an dem Wischblatt 12 zwischen dem Düsengrundkörper 18 und einem Düsenhauptkörper 60 der Düseneinheit 16 vorgesehen. Das Befestigungselement 40 ist zu einer Befestigung des Düsengrundkörpers 18, des Fluidleitungselements 34 oder des Zusatzdüsenkörpers 42 an dem Wischblatt 12 vorgesehen. Die Wischervorrichtung 10 kann eine Mehrzahl von Befestigungselementen 40 aufweisen, wobei jeweils zumindest eines der Befestigungselemente 40 zu einer Befestigung des Düsengrundkörpers 18 an dem Wischblatt 12, jeweils zumindest eines der Befestigungselemente 40 zu einer Befestigung des Fluidleitungselements 34 an dem Wischblatt 12 und jeweils zumindest eines der Befestigungselemente 40 zu einer Befestigung des Zusatzdüsenkörpers 42 an dem Wischblatt 12 vorgesehen ist. Die Wischervorrichtung 10 weist beispielhaft ein einzelnes Befestigungselement 40 auf, das zu einer Befestigung des Fluidleitungselements 34 vorgesehen ist (vgl. Figur 4). Alternativ ist vorstellbar, dass das Befestigungselement 40 zu einer Befestigung des Düsengrundkörpers 18, des Fluidleitungselements 34 und des Zusatzdüsenkörpers 42 an dem Wischblatt 12 vorgesehen ist. Insbesondere ist denkbar, dass das Befestigungselement 40 eine Mehrzahl von Befestigungsfortsätzen 58 zu einer, insbesondere gleichzeitigen, Befestigung des Düsengrundkörpers 18, des Fluidleitungselements 34 und des Zusatzdüsenkörpers 42 an dem Wischblatt 12 aufweist.

Figur 3 zeigt eine Schnittansicht der Wischervorrichtung 10 in einer schematischen Darstellung. Dargestellt ist der Endbereich 20 des Wischblatts 12. Der Düsengrundkörper 18 ist in einem Querschnitt dargestellt. Der Düsengrundkörper 18 weist zumindest ein Fixierelement 24 auf, das zu einer kraft- und/oder formschlüssigen, insbesondere werkzeuglosen, Fixierung des Düsengrundkörpers 18 an dem Wischblatt 12, insbesondere an zumindest einem Montagefortsatz 26 des Wischblatts 12, vorgesehen ist. Der Düsengrundkörper 18 weist ein einzelnes Fixierelement 24 auf. Der Düsengrundkörper 18 ist mittels des Fixierelements 24 werkzeuglos an dem Wischblatt 12, insbesondere an dem Montagefortsatz 26 des Wischblatts 12, fixierbar. Der Düsengrundkörper 18 ist mittels des Fixierelements 24 an den Montagefortsatz 26 des Wischblatts 12 klemmbar, insbesondere mit dem Montagefortsatz 26 des Wischblatts 12 verrastbar. Der Düsengrundkörper 18 ist mittels des Fixierelements 24 entlang einer Montagerichtung 62 auf den Montagefortsatz 26 des Wischblatts 12 aufsteckbar. Alternativ oder zusätzlich ist vorstellbar, dass der Düsengrundkörper 18 mittels des Fixierelements 24 unter Verwendung zumindest eines Werkzeugs an dem Wischblatt 12, insbesondere an dem Montagefortsatz 26 des Wischblatts 12, fixierbar, beispielhaft verschraubbar, ist. Das Fixierelement 24 des Düsengrundkörpers 18 ist als eine zumindest abschnittsweise Ausnehmung, insbesondere eine Nut, in dem Düsengrundkörper 18 ausgebildet. Alternativ ist vorstellbar, dass der Montagefortsatz 26 als eine zumindest abschnittsweise Ausnehmung, insbesondere eine Nut, in dem Wischblatt 12 und das Fixierelement 24 als ein, insbesondere federartig ausgebildeter, Fortsatz des Düsengrundkörpers 18 ausgebildet ist. Das Fixierelement 24 weist eine mit einer Formgebung des Montagefortsatzes 26 korrespondierende Formgebung auf. Das Fixierelement 24 weist zumindest einen Rastfortsatz 64 zu einer Verrastung mit dem Montagefortsatz 26 auf. Das Fixierelement 24 weist zwei Rastfortsätze 64 zu einer zweiseitigen Verrastung mit dem Montagefortsatz 26 auf. Der Montagefortsatz 26 und das Fixierelement 24 stehen in einem an dem Wischblatt 12 fixierten Zustand des Düsengrundkörpers 18 in einem kraft- und/oder formschlüssigen Eingriff miteinander. Der Montagefortsatz 26 und das Fixierelement 24 liegen in einem an dem Wischblatt 12 fixierten Zustand des Düsengrundkörpers 18 zumindest im Wesentlichen formgenau, insbesondere puzzleteilartig, aneinander an.

Der Düsengrundkörper 18 ist einteilig mit zumindest einer Endkappe 22 des Wischblatts 12 ausgebildet. Der Düsengrundkörper 18 bildet die Endkappe 22 des Wischblatts 12 zumindest teilweise aus. Der Düsengrundkörper 18 bildet die Endkappe 22 des Wischblatts 12 vollständig aus. Die Endkappe 22 des Wischblatts 12 stellt einen Abschluss des Wischblatts 12 in dem Endbereich 20 des Wischblatts 12 dar. Die Endkappe 22 kann dazu vorgesehen sein, weitere Bauteile des Wischblatts 12, beispielsweise den Spoiler 28, zu fixieren. Der Düsengrundkörper 18 bzw. die Endkappe 22 ist aus einem Kunststoff ausgebildet. Alternativ ist denkbar, dass der Düsengrundkörper 18 bzw. die Endkappe 22 aus einem Verbundwerkstoff, insbesondere einem Faserverbundwerkstoff, aus einem Metall oder aus einem anderen, einem Fachmann als sinnvoll erscheinenden Werkstoff ausgebildet ist.

Der Düsengrundkörper 18 weist den Spoilerfortsatz 30 auf. Ein Teil des Spoilers 28 in dem Endbereich 20 des Wischblatts 12 ist durch den Spoilerfortsatz 30 des Düsengrundkörpers 18 ausgebildet. Der Spoilerfortsatz 30 ist an einer dem Fixierelement 24 abgewandten Seite des Düsengrundkörpers 18 angeordnet. Der Spoilerfortsatz 30 weist eine zumindest im Wesentlichen analoge Formgebung zu dem Spoilergrundkörper 56 auf (vgl. Figur 2). Der Spoilergrundkörper 56 und der Spoilerfortsatz 30 liegen in einem an dem Wischblatt 12 angeordneten Zustand des Spoilergrundkörpers 56 und des Düsengrundkörpers 18 entlang der Haupterstreckungsrichtung 54 des Wischblatts 12 betrachtet zumindest im Wesentlichen formgenau, insbesondere zumindest im Wesentlichen bündig, aneinander an. Der Spoilerfortsatz 30 ist dazu vorgesehen, als eine optische und/oder funktionelle Verlängerung des Spoilergrundkörpers 56 in dem Endbereich 20 des Wischblatts 12 zu dienen.

Figur 4 zeigt die Fluidausgabeeinheit 14 der Wischervorrichtung 10 in einer perspektivischen Darstellung. Das Wischblatt 12 ist der Übersichtlichkeit halber nicht weiter dargestellt. Die Fluidausgabeeinheit 14 umfasst die Düseneinheit 16. Die Düseneinheit 16 ist dazu vorgesehen, zu einer Reinigung der Scheibe 46 ein Fluid auf die Scheibe 46 auszugeben, insbesondere zu sprühen (vgl. Figur 1). Das Fluid ist als ein Wischwasser ausgebildet. Die Düseneinheit 16 umfasst den Düsenhauptkörper 60. Der Düsenhauptkörper 60 ist in einem an dem Wischblatt 12 montierten Zustand an dem Adapterbereich 38 des Wischblatts 12 angeordnet, insbesondere an dem Wischblatt 12 fixiert. Das Wischblatt 12 ist an dem Adapterbereich 38 mittels des Wischarmadapters 52 des Scheibenwischers 44 mit dem Wischerarm 50 des Scheibenwischers 44 verbunden (vgl. Figur 1). Der Düsenhauptkörper 60 ist fest an dem Wischblatt 12 angeordnet. Alternativ ist denkbar, dass der Düsenhauptkörper 60 abnehmbar an dem Wischblatt 12 angeordnet ist. Der Düsenhauptkörper 60 weist eine Mehrzahl von Düsenelementen 66 auf, die zu einer Ausgabe eines Fluids vorgesehen sind. Die Düsenelemente 66 des Düsenhauptkörpers 60 sind als Spritzdüsen ausgebildet. Die Düsenelemente 66 des Düsenhauptkörpers 60 sind dazu vorgesehen, ein Fluid quer zu einer Bewegungsrichtung des Wischblatts 12 auszugeben. Eine Mehrheit der Mehrzahl von Düsenelementen 66 des Düsenhauptkörpers 60 ist von dem Endbereich 20 des Wischblatts 12 weggerichtet an dem Düsenhauptkörper 60 angeordnet. Die Mehrheit der Mehrzahl von Düsenelementen 66 des Düsenhauptkörpers 60 ist dazu vorgesehen, ein Fluid zumindest im Wesentlichen in Richtung eines weiteren, von dem Endbereich 20 des Wischblatts 12 abgewandten Endbereichs auszugeben. Die Fluidausgabeeinheit 14 weist ein Ventilelement 68 zu einer gesteuerten Zuleitung eines Fluids an die Düseneinheit 16, insbesondere an den Düsenhauptkörper 60, auf. Ein Kraftfahrzeug, an dem die Wischervorrichtung 10 einsetzbar ist, weist zumindest ein Fluidreservoir zu einer Speicherung eines Fluids auf. Ein Fluid aus dem Fluidreservoir ist über ein Zuleitungselement, beispielsweise einen Schlauch, des Scheibenwischers 44 und über das Ventilelement 68 der Fluidausgabeeinheit 14 der Düseneinheit 16, insbesondere dem Düsenhauptkörper 60, zuleitbar.

Der Düsengrundkörper 18 weist zumindest ein Kupplungselement 32 zu einer fluidtechnischen Verbindung mit zumindest einem Fluidleitungselement 34 der Fluidausgabeeinheit 14 auf, das dazu vorgesehen ist, dem Düsengrundkörper 18 zumindest ein Fluid zuzuführen. Der Düsengrundkörper 18 weist ein einzelnes Kupplungselement 32 auf. Das Kupplungselement 32 ist auf einer dem Fixierelement 24 abgewandten Seite des Düsengrundkörpers 18 angeordnet. Das Kupplungselement 32 ist quer zu der Haupterstreckungsrichtung 54 des Wischblatts 12 beabstandet zu dem Spoilerfortsatz 30 angeordnet. In Figur 3 ist das Kupplungselement 32 der Übersichtlichkeit halber nicht weiter dargestellt. Das Kupplungselement 32 erstreckt sich in einem an dem Wischblatt 12 montierten Zustand des Düsengrundkörpers 18 zumindest abschnittsweise in Richtung des Adapterbereichs 38 des Wischblatts 12. Das Kupplungselement 32 ist zumindest im Wesentlichen als ein Rohr ausgebildet. Das Kupplungselement 32 ist dazu vorgesehen, ein dem Düsengrundkörper 18 von dem Fluidleitungselement 34 zugeführtes Fluid an ein Düsenelement 36 des Düsengrundkörpers 18 zu leiten. Das Fluidleitungselement 34 ist als ein Schlauch ausgebildet, innerhalb dessen ein Fluid fließen kann. Das Fluidleitungselement 34 ist als ein zumindest teilelastischer Schlauch ausgebildet. Das Fluidleitungselement 34 ist zu einer fluidtechnischen Verbindung mit dem Kupplungselement 32 zumindest abschnittsweise auf das Kupplungselement 32 aufschiebbar. In Figur 4 ist das Fluidleitungselement 34 der Übersichtlichkeit halber getrennt von dem Kupplungselement 32 dargestellt. Das Fluidleitungselement 34 ist aufgrund einer Eigenelastizität des Fluidleitungselements 34 an dem Kupplungselement 32 festklemmbar. Alternativ oder zusätzlich ist denkbar, dass die Fluidausgabeeinheit 14 zumindest eine Schlauchschelle, zumindest eine Schlauchklemme o. dgl. zu einer Fixierung des Fluidleitungselements 34 an dem Kupplungselement 32 aufweist. Das Fluidleitungselement 34 ist zu einer Zuführung eines Fluids an den Düsengrundkörper 18 aus dem Düsenhauptkörper 60 vorgesehen. Das Fluidleitungselement 34 ist dazu vorgesehen, den Düsengrundkörper 18 fluidtechnisch mit dem Düsenhauptkörper 60 zu verbinden. Das Fluidleitungselement 34 verläuft zumindest im Wesentlichen linear zwischen dem Düsenhauptkörper 60 und dem Düsengrundkörper 18. Das Fluidleitungselement 34 verläuft in einem an dem Wischblatt 12 montierten Zustand zumindest im Wesentlichen parallel zu der Haupterstreckungsrichtung 54 des Wischblatts 12 an dem Wischblatt 12, insbesondere entlang des Spoilers 28. Alternativ ist denkbar, dass das Fluidleitungselement 34 dazu vorgesehen ist, dem Düsengrundkörper 18 ein Fluid direkt aus dem Fluidreservoir zuzuführen.

Der Düsengrundkörper 18 weist zumindest ein Düsenelement 36 auf, das dazu vorgesehen ist, zumindest ein Fluid zumindest im Wesentlichen in Richtung des Adapterbereichs 38 des Wischblatts 12 auszugeben. Der Düsengrundkörper 18 weist ein einzelnes Düsenelement 36 auf. Alternativ ist vorstellbar, dass der Düsengrundkörper 18 eine Mehrzahl von Düsenelementen 36 aufweist. Das Düsenelement 36 des Düsengrundkörpers 18 ist zumindest im Wesentlichen in Richtung des Adapterbereichs 38 ausgerichtet. Das Düsenelement 36 des Düsengrundkörpers 18 ist in Figur 4 aufgrund der perspektivischen Darstellung nicht zu erkennen. Eine Fluidausgaberichtung des Düsenelements 36 des Düsengrundkörpers 18 ist durch einen Fluidstrahl 70 des Düsenelements 36 des Düsengrundkörpers 18 dargestellt. Das Düsenelement 36 des Düsengrundkörpers 18 ist fluidtechnisch mit dem Kupplungselement 32, insbesondere innerhalb des Düsengrundkörpers 18, verbunden. Das Kupplungselement 32 ist dazu vorgesehen, dem Düsenelement 36 des Düsengrundkörpers 18 ein auszugebendes Fluid bereitzustellen. Das Düsenelement 36 des Düsengrundkörpers 18 ist zu einer Ausgabe, insbesondere einem Spritzen, eines Fluids unter einem Überdruck im Vergleich zu einem Umgebungsdruck der Wischervorrichtung 10 vorgesehen. Das Düsenelement 36 des Düsengrundkörpers 18 ist zumindest im Wesentlichen analog zu den Düsenelementen 66 des Düsenhauptkörpers 60 ausgebildet.

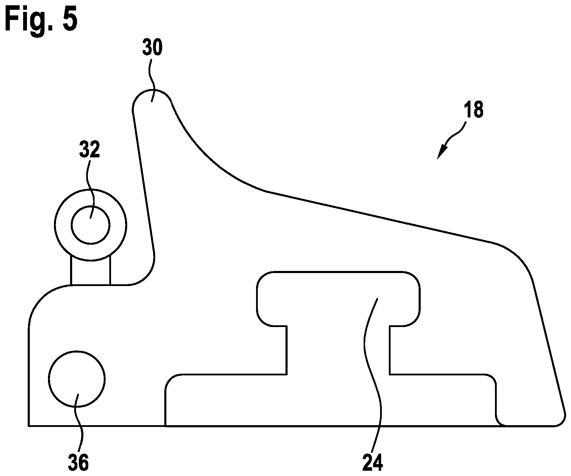

Figur 5 zeigt den Düsengrundkörper 18 in einer schematischen Darstellung. Es ist eine einer in Figur 3 dargestellten Seite des Düsengrundkörpers 18 abgewandte Seite des Düsengrundkörpers 18 dargestellt. Zu erkennen sind das Düsenelement 36 des Düsengrundkörpers 18, das Kupplungselement 32, der Spoilerfortsatz 30 und das Fixierelement 24. Das Düsenelement 36 des Düsengrundkörpers 18 ist zumindest teilweise als ein Ventil, insbesondere als ein Kugelventil, ausgebildet. Das Düsenelement 36 des Düsengrundkörpers 18 ist zumindest teilweise als ein Kugelventil ausgebildet. Alternativ ist vorstellbar, dass das Düsenelement 36 des Düsengrundkörpers 18 als ein Tellerventil, als ein Kolbenventil oder als ein anderes, einem Fachmann als sinnvoll erscheinendes Ventil ausgebildet ist. Die Düsenelemente 66 des Düsenhauptkörpers 60 können auch als Ventile, insbesondere als Kugelventile, ausgebildet sein. Das Düsenelement 36 des Düsengrundkörpers 18 ist dazu vorgesehen, ein Fluid in Abhängigkeit von einem Druck des Fluids auszugeben. Das Düsenelement 36 des Düsengrundkörpers 18 ist dazu vorgesehen, eine Ausgabeöffnung des Düsengrundkörpers 18 in Abhängigkeit von einem Druck eines Fluids zu öffnen und zu schließen. Alternativ oder zusätzlich ist vorstellbar, dass das Düsenelement 36 des Düsengrundkörpers 18 steuer- und/oder regelbar, beispielsweise durch eine Fahrzeugelektronik eines Fahrzeugs, an dem die Wischervorrichtung 10 verwendbar ist, ausgebildet ist. Insbesondere ist denkbar, dass das Düsenelement 36 des Düsengrundkörpers 18 zu einer Ausgabe eines Fluids in Abhängigkeit von einer Steuerung und/oder Regelung, beispielsweise durch die Fahrzeugelektronik, vorgesehen ist.

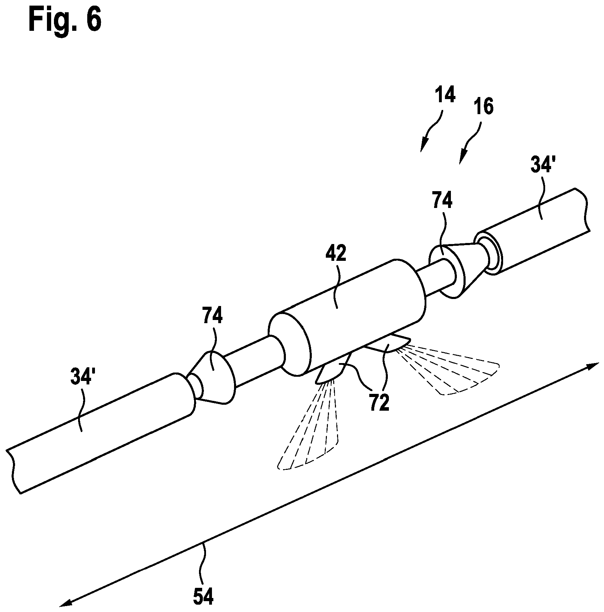

Figur 6 zeigt den Zusatzdüsenkörper 42 in einer perspektivischen Darstellung. Der Zusatzdüsenkörper 42 ist als ein weiterer Düsenkörper ausgebildet. Der Zusatzdüsenkörper 42 ist zusätzlich zu dem Düsengrundkörper 18 und dem Düsenhauptkörper 60 an dem Wischblatt 12 anordenbar. Die Düseneinheit 16 weist einen einzelnen Zusatzdüsenkörper 42 auf. Alternativ ist vorstellbar, dass die Düseneinheit 16 eine Mehrzahl von Zusatzdüsenkörpern 42 aufweist, die insbesondere beabstandet voneinander an dem Wischblatt 12 anordenbar sind. Der Zusatzdüsenkörper 42 ist zumindest im Wesentlichen zylinderförmig, insbesondere rohrartig, ausgebildet. Der Zusatzdüsenkörper 42 ist entlang der Haupterstreckungsrichtung 54 des Wischblatts 12 betrachtet zwischen dem Düsengrundkörper 18 und dem Düsenhauptkörper 60 anordenbar (vgl. Figur 4). Der Zusatzdüsenkörper 42 weist zumindest ein Düsenelement 72 zu einer Ausgabe eines Fluids auf. Der Zusatzdüsenkörper 42 weist zwei Düsenelemente 72 auf. Eines der Düsenelemente 72 des Zusatzdüsenkörpers 42 ist in einem an dem Wischblatt 12 montierten Zustand des Zusatzdüsenkörpers 42 zumindest im Wesentlichen in Richtung des Adapterbereichs 38 des Wischblatts 12 und ein weiteres der Düsenelemente 72 des Zusatzdüsenkörpers 42 zumindest im Wesentlichen in Richtung des Düsengrundkörpers 18 ausgerichtet. Die Düsenelemente 72 des Zusatzdüsenkörpers 42 sind zumindest im Wesentlichen analog zu dem Düsenelement 36 des Düsengrundkörpers 18 ausgebildet. Der Zusatzdüsenkörper 42 weist zumindest ein Kupplungselement 74 zu einer fluidtechnischen Verbindung mit zumindest einem Fluidleitungselement 34' auf. Der Zusatzdüsenkörper 42 umfasst zwei, an zwei voneinander abgewandten Seiten des Zusatzdüsenkörpers 42 angeordnete, Kupplungselemente 74. Jedes der Kupplungselemente 32 des Zusatzdüsenkörpers 42 ist zu einer fluidtechnischen Verbindung mit jeweils einem Fluidleitungselement 34' der Fluidausgabeeinheit 14 vorgesehen. Die Kupplungselemente 74 des Zusatzdüsenkörpers 42 sind zumindest im Wesentlichen analog zu dem Kupplungselement 32 des Düsengrundkörpers 18 ausgebildet. Ein Fluidleitungselement 34' ist dazu vorgesehen, den Zusatzdüsenkörper 42 fluidtechnisch mit dem Düsenhauptkörper 60 zu verbinden. Ein weiteres Fluidleitungselement 34' ist dazu vorgesehen, den Zusatzdüsenkörper 42 fluidtechnisch mit dem Düsengrundkörper 18 zu verbinden.

Im Folgenden wird ein Verfahren zu einer Montage der Wischervorrichtung 10 beschrieben. Dieses Verfahren ist nicht Teil der Erfindung. In zumindest einem Verfahrensschritt wird der Düsengrundkörper 18 der Düseneinheit 16 an dem Endbereich 20 des Wischblatts 12 angeordnet, insbesondere abnehmbar angeordnet. In zumindest einem weiteren Verfahrensschritt wird der Düsengrundkörper 18 mittels des Fixierelements 24 des Düsengrundkörpers 18 kraft- und/oder formschlüssig, insbesondere werkzeuglos, an dem Wischblatt 12, insbesondere an zumindest einem Montagefortsatz 26 des Wischblatts 12, befestigt.

Hinsichtlich weiterer Verfahrensschritte des Verfahrens zu einer Montage der Wischervorrichtung 10 darf auf die vorhergehende Beschreibung der Wischervorrichtung 10 verwiesen werden, da diese Beschreibung analog auch auf das Verfahren zu lesen ist und somit alle Merkmale hinsichtlich der Wischervorrichtung 10 auch in Bezug auf das Verfahren zu einer Montage der Wischervorrichtung 10 als offenbart gelten.

## Patentansprüche

1. Wischervorrichtung mit zumindest einem Wischblatt (12) und mit zumindest einer Fluidausgabeeinheit (14), die zumindest eine an dem Wischblatt (12) angeordnete Düseneinheit (16) zu einer Ausgabe zumindest eines Fluids, insbesondere eines Wischwassers, aufweist,
wobei die Düseneinheit (16) einen Düsenhauptkörper (60) umfasst, der in einem an dem Wischblatt (12) montierten Zustand an einem Adapterbereich(38) des Wischblatts (12) angeordnet ist und zumindest ein Düsenelement (66) aufweist, wobei
die Düseneinheit (16) zumindest einen Düsengrundkörper (18) aufweist, der an zumindest einem Endbereich (20) des Wischblatts (12) abnehmbar angeordnet ist,
**dadurch gekennzeichnet, dass** der
Düsengrundkörper (18) zumindest ein Fixierelement (24) aufweist, das zu einer kraft- und/oder formschlüssigen werkzeuglosen Fixierung des Düsengrundkörpers (18) an zumindest einem Montagefortsatz (26) des Wischblatts (12) vorgesehen ist, wobei der Montagefortsatz (26) federartig ausgebildet und zu einem Eingriff in das, insbesondere nutartig ausgebildete, Fixierelement (24) des Düsengrundkörpers (18) vorgesehen ist.

2. Wischervorrichtung nach Anspruch 1, **dadurch gekennzeichnet, dass** der Düsengrundkörper (18) einteilig mit zumindest einer Endkappe (22) des Wischblatts (12) ausgebildet ist.

3. Wischervorrichtung nach einem der vorhergehenden Ansprüche, **gekennzeichnet durch** zumindest einen an dem Wischblatt (12) anordenbaren Spoiler (28), wobei der Düsengrundkörper (18) zumindest einen Spoilerfortsatz (30) aufweist, der zumindest einen Teil des Spoilers (28) ausbildet.

4. Wischervorrichtung nach einem der vorhergehenden Ansprüche, **dadurch gekennzeichnet, dass** der Düsengrundkörper (18) zumindest ein Kupplungselement (32) zu einer fluidtechnischen Verbindung mit zumindest einem Fluidleitungselement (34) der Fluidausgabeeinheit (14) aufweist, das dazu vorgesehen ist, dem Düsengrundkörper (18) zumindest ein Fluid zuzuführen.

5. Wischervorrichtung nach einem der vorhergehenden Ansprüche, **dadurch gekennzeichnet, dass** der Düsengrundkörper (18) zumindest ein Düsenelement (36) aufweist, das dazu vorgesehen ist, zumindest ein Fluid zumindest im Wesentlichen in Richtung eines Adapterbereichs (38) des Wischblatts (12) auszugeben.

6. Wischervorrichtung nach Anspruch 5, **dadurch gekennzeichnet, dass** das Düsenelement (36) zumindest teilweise als ein Ventil, insbesondere als ein Kugelventil, ausgebildet ist.

7. Wischervorrichtung nach einem der vorhergehenden Ansprüche, **gekennzeichnet durch** zumindest ein Befestigungselement (40), das zu einer kraft- und/oder formschlüssigen, insbesondere werkzeuglosen, Befestigung des Düsengrundkörpers (18), zumindest eines Fluidleitungselements (34) der Fluidausgabeeinheit (14) und/oder zumindest eines Zusatzdüsenkörpers (42) der Düseneinheit (16) an dem Wischblatt (12), insbesondere an zumindest einem einteilig mit dem Wischblatt (12) ausgebildeten Spoiler (28), vorgesehen ist.

8. Scheibenwischer mit zumindest einer Wischervorrichtung nach einem der Ansprüche 1 bis 7.

## Claims

1. Wiper device having at least one wiper blade (12) and having at least one fluid-dispensing unit (14), which has at least one nozzle unit (16), which is arranged on the wiper blade (12), for dispensing at least one fluid, in particular wiping water, wherein the nozzle unit (16) comprises a nozzle main body (60) which, in a state mounted on the wiper blade (12), is arranged on an adapter region (38) of the wiper blade (12) and has at least one nozzle element (66), wherein the nozzle unit (16) has at least one nozzle basic body (18), which is arranged removably on at least one end region (20) of the wiper blade (12), **characterized in that** the nozzle basic body (18) has at least one fixing element (24) which is provided for force- and/or form-fitting tool-free fixing of the nozzle basic body (18) on at least one mounting extension (26) of the wiper blade (12), wherein the mounting extension (26) is designed in the manner of a tongue and is provided for engagement in the fixing element (24), which is formed in particular in the manner of a groove, of the nozzle basic body (18).

2. Wiper device according to Claim 1, **characterized in that** the nozzle basic body (18) is formed integrally with at least one end cap (22) of the wiper blade (12).

3. Wiper device according to either of the preceding claims, **characterized by** at least one spoiler (28) which can be arranged on the wiper blade (12), wherein the nozzle basic body (18) has at least one spoiler extension (30) which forms at least part of the spoiler (28).

4. Wiper device according to one of the preceding claims, **characterized in that** the nozzle basic body (18) has at least one coupling element (32) for forming a fluidic connection to at least one fluid line element (34) of the fluid-dispensing unit (14), which fluid line element is provided for supplying at least one fluid to the nozzle basic body (18).

5. Wiper device according to one of the preceding claims, **characterized in that** the nozzle basic body (18) has at least one nozzle element (36) which is provided for dispensing at least one fluid at least substantially in the direction of an adapter region (38) of the wiper blade (12).

6. Wiper device according to Claim 5, **characterized in that** the nozzle element (36) is at least partially designed as a valve, in particular as a ball valve.

7. Wiper device according to one of the preceding claims, **characterized by** at least one fastening element (40) which is provided for force- and/or form-fitting, in particular tool-free, fastening of the nozzle basic body (18), at least one fluid line element (34) of the fluid-dispensing unit (14) and/or at least one additional nozzle body (42) of the nozzle unit (16) to the wiper blade (12), in particular to at least one spoiler (28) formed integrally with the wiper blade (12).

8. Window wiper having at least one wiper device according to one of Claims 1 to 7.

## Revendications

1. Dispositif d'essuie-glace comprenant au moins un balai d'essuie-glace (12) et avec au moins une unité (14) de distribution de fluide, qui présente au moins une unité (16) formant buse agencée sur le balai d'essuie-glace (12) pour distribuer au moins un fluide, en particulier de l'eau d'essuyage, l'unité (16) formant buse comprenant un corps principal de buse (60) qui, dans un état monté sur le balai d'essuie-glace (12), est agencé sur une zone d'adaptation (38) du balai d'essuie-glace (12) et présente au moins un élément de buse (66), l'unité (16) formant buse présente au moins un corps de base de buse (18), qui est agencé de manière amovible sur au moins une zone d'extrémité (20) du balai d'essuie-glace (12), **caractérisé en ce que** le corps de base de buse (18) présente au moins un élément de fixation (24), qui est prévu pour une fixation par force et/ou par complémentarité de formes du corps de base de buse (18) sans outil sur au moins une extension de montage (26) du balai d'essuie-glace (12), l'extension de montage (26) étant conçue sous la forme d'un ressort et étant destinée à venir en engagement dans l'élément de fixation (24), en particulier réalisé sous forme d'une rainure, du corps de base de buse (18).

2. Dispositif d'essuie-glace selon la revendication 1, **caractérisé en ce que** le corps de base de buse (18) est formé d'une seule pièce avec au moins un embout (22) du balai d'essuie-glace (12).

3. Dispositif d'essuie-glace selon l'une des revendications précédentes, **caractérisé par** au moins un déflecteur (28) apte à être agencé sur le balai d'essuie-glace (12), le corps de base de buse (18) présentant au moins une extension de déflecteur (30) qui forme au moins une partie du déflecteur (28).

4. Dispositif d'essuie-glace selon l'une des revendications précédentes, **caractérisé en ce que** le corps de base de buse (18) présente au moins un élément de connexion (32) pour une connexion fluidique avec au moins un élément (34) formant conduite de fluide de l'unité (14) de distribution de fluide, qui est prévu pour amener au moins un fluide au corps de base de buse (18) .

5. Dispositif d'essuie-glace selon l'une quelconque des revendications précédentes, **caractérisé en ce que** le corps de base de buse (18) présente au moins un élément de buse (36) prévu pour délivrer au moins un fluide au moins sensiblement en direction d'une zone d'adaptation (38) du balai d'essuie-glace (12).

6. Dispositif d'essuie-glace selon la revendication 5, **caractérisé en ce que** l'élément de buse (36) est réalisé au moins partiellement sous la forme d'une vanne, notamment d'une vanne à boisseau sphérique.

7. Dispositif d'essuie-glace selon l'une des revendications précédentes, **caractérisé par** au moins un élément de fixation (40) prévu pour une fixation par force et/ou par complémentarité de formes, notamment sans outil, du corps de base de buse (18), d'au moins un élément (34) de conduite de fluide de l'unité (14) de distribution de fluide et/ou d'au moins un corps de buse supplémentaire (42) de l'unité (16) formant buse sur le balai d'essuie-glace (12), notamment sur au moins un déflecteur (28) réalisé d'un seul tenant avec le balai d'essuie-glace (12).

8. Essuie-glace comportant au moins un dispositif d'essuie-glace selon l'une des revendications 1 à 7.
